# FASCICULE DE BREVET EUROPEEN

(11) **EP 4 148 289 B1**
(45) Date de publication et mention de la délivrance du brevet: **29.10.2025**
(21) Numéro de dépôt: 22194718.7
(22) Date de dépôt: 08.09.2022
(51) Int. Cl.: F16B 43/00

(54) **ELÉMENT INTERCALAIRE PRÉDÉCOUPÉ PERMETTANT D'OBTENIR UNE RONDELLE INTERCALAIRE POSITIONNÉE ENTRE DES PIÈCES D'UN ASSEMBLAGE ET PROCÉDÉ D'ASSEMBLAGE D'AU MOINS DEUX PIÈCES UTILISANT AU MOINS UN TEL ÉLÉMENT INTERCALAIRE PRÉDÉCOUPÉ**
VORGESCHNITTENES ZWISCHENELEMENT ZUR HERSTELLUNG EINER ZWISCHENSCHEIBE, DIE ZWISCHEN TEILEN EINER ANORDNUNG POSITIONIERT IST, UND VERFAHREN ZUM ZUSAMMENBAU VON MINDESTENS ZWEI TEILEN UNTER VERWENDUNG MINDESTENS EINES SOLCHEN VORGESCHNITTENEN ZWISCHENELEMENTS
PRE-CUT INTERMEDIATE ELEMENT FOR OBTAINING AN INTERMEDIATE WASHER POSITIONED BETWEEN PARTS OF AN ASSEMBLY AND METHOD FOR ASSEMBLING AT LEAST TWO PARTS USING AT LEAST ONE SUCH PRE-CUT INTERMEDIATE ELEMENT

(30) Priorité: 13.09.2021 FR 2109583
(43) Date de publication de la demande: 15.03.2023
(73) Titulaire: AIRBUS OPERATIONS (S.A.S.), 31060 Toulouse (FR)
(72) Inventeur: CHIROL, Clément, 31060 TOULOUSE (FR); BENABEN, Audrey, 31060 TOULOUSE (FR); PICHON, Guillaume, 31060 TOULOUSE (FR)
(74) Mandataire: Fantin, Laurent

(56) Documents cités:
- DE-A1- 2 418 598
- DE-A1- 3 244 167
- GB-A- 1 269 924
- JP-A- 2010 101 401
- JP-B2- 4 163 772
- US-A- 2 439 516

## Description

La présente demande se rapporte à un élément intercalaire prédécoupé permettant d'obtenir une rondelle intercalaire positionnée entre des pièces d'un assemblage ainsi qu'à un procédé d'assemblage d'au moins deux pièces utilisant au moins un tel élément intercalaire prédécoupé.

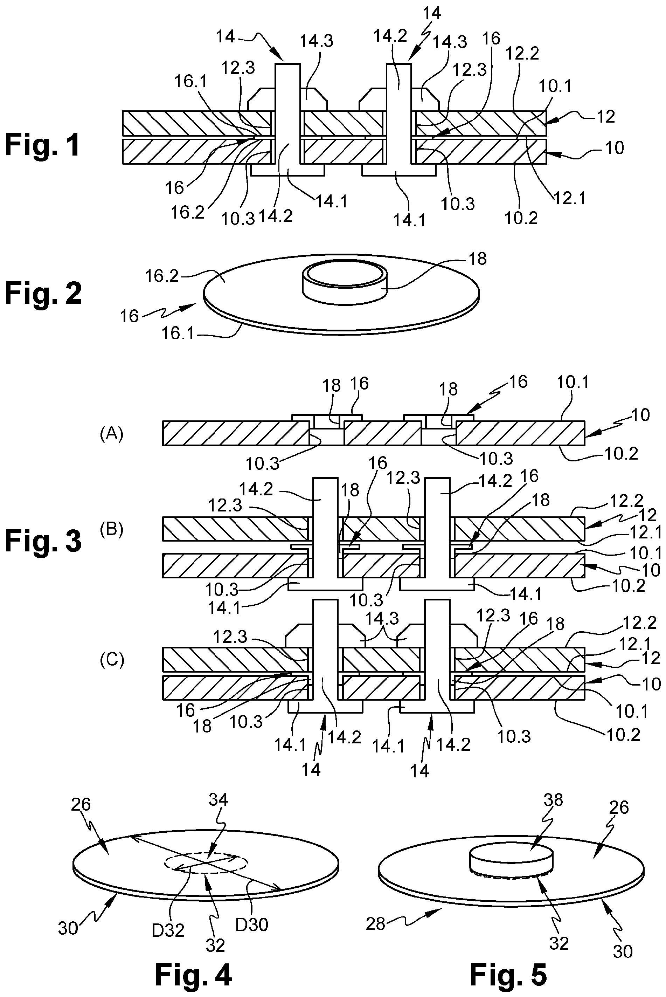

Selon un mode de réalisation visible sur la figure 1, un assemblage comprend au moins deux pièces 10, 12 maintenues assemblées par au moins un boulon 14. La première pièce 10 comprend une première face 10.1 orientée vers la deuxième pièce 12, une deuxième face 10.2 opposée à la première face 10.1 ainsi qu'un orifice traversant 10.3, un pour chaque boulon 14, débouchant au niveau des première et deuxième faces 10.1, 10.2. La deuxième pièce 12 comprend une première face 12.1 orientée vers la première pièce 10, une deuxième face 12.2 opposée à la première face 12.1 ainsi qu'un orifice traversant 12.3, un pour chaque boulon 14, débouchant au niveau des première et deuxième faces 12.1, 12.2. Le boulon 14 comprend une vis présentant une tête 14.1 plaquée contre la deuxième face 10.2 de la première pièce 10 et une tige filetée 14.2 logée dans les orifices traversants 10.3, 12.3 des première et deuxième pièces 10, 12 ainsi qu'un écrou 14.3 vissé sur la tige filetée 14.2 et plaqué contre la deuxième face 12.2 de la deuxième pièce 12.

Selon une configuration, l'assemblage comprend, pour chaque boulon 14, une rondelle intercalaire 16 positionnée entre les première et deuxième pièces 10, 12 et autour de la tige filetée 14.2 du boulon 14. Cette rondelle intercalaire 16 comprend des faces 16.1, 16.2 présentant des coefficients de frottement élevés.

Cette rondelle intercalaire 16 permet d'améliorer les caractéristiques mécaniques de l'assemblage, notamment en matière de résistance au cisaillement.

Selon un premier mode opératoire, les tiges filetées 14.2 des différents boulons 14 sont insérées dans les orifices traversants 10.3 de la première pièce 10 puis les rondelles intercalaires 16 sont enfilées sur les tiges filetées 14.2. En suivant, la deuxième pièce 12 est mise en place puis les écrous 14.3 des différents boulons 14 sont serrés. Ce mode opératoire ne convient pas lorsque les pièces 10 et 12 à assembler sont de grandes dimensions et qu'elles doivent être positionnées l'une par rapport à l'autre avant l'insertion des tiges filetées 14.2.

Selon un mode de réalisation visible sur la figure 2, une rondelle intercalaire 16 comprend une bague de centrage 18. La rondelle intercalaire 16 et la bague de centrage 18 sont solidaires et la bague de centrage 18 présente un diamètre extérieur sensiblement égal à celui de l'orifice traversant 10.3 de la première pièce 10.

Selon un deuxième mode opératoire visible sur la figure 3, une rondelle intercalaire 16 est positionnée au niveau de chaque orifice traversant 10.3 de la première pièce 10 en insérant la bague de centrage 18 dans l'orifice traversant 10.3, comme illustré sur la partie (A) de la figure 3. En suivant, les première et deuxième pièces 10, 12 sont positionnées l'une par rapport à l'autre, en faisant coïncider les orifices traversants 10.3 de la première pièce 10 avec ceux de la deuxième pièce 12, puis les tiges filetées 14.2 des boulons 14 sont insérées dans les trous traversants 10.3, 12.3 des première et deuxième pièces 10, 12, comme illustré sur la partie (B) de la figure 3. Enfin, les écrous 14.3 des différents boulons 14 sont serrés, comme illustré sur la partie (C) de la figure 3.

Même si la bague de centrage 18 permet à chaque rondelle intercalaire 16 de rester positionnée au droit des orifices traversants 10.3, 12.3 avant la mise en place des tiges filetées 14.2, ce mode opératoire n'est pas satisfaisant car les bagues de centrage 18 peuvent interférer avec les tiges filetées 14.2 et rendre difficile leur mise en place.

Le document DE2418598 décrit une rondelle intercalée entre une pièce et un écrou, positionnée autour d'une tige filetée. Cette rondelle comprend un premier anneau extérieur en appui contre la pièce ainsi qu'un deuxième anneau intérieur décalé vers l'écrou par rapport au premier anneau extérieur, pourvu d'un orifice pour laisser passer la tige filetée et relié au premier anneau par une liaison sécable en cas d'effort trop important. En cas de rupture, le deuxième anneau intérieur est positionné dans l'orifice du premier anneau extérieur. Cette rondelle ne comprend aucun plot de centrage. De plus, elle n'est pas prévue pour se rompre lors de l'insertion de la tige filetée.

Le document JP2010101401 décrit des rondelles superposables comprenant une pluralité de plots permettant d'écarter les rondelles.

La présente invention vise à remédier à tout ou partie des inconvénients de l'art antérieur.

A cet effet, l'invention a pour objet un élément intercalaire permettant d'obtenir une rondelle intercalaire comportant des première et deuxième faces, une épaisseur, un pourtour ainsi qu'un trou traversant présentant un diamètre intérieur, ladite rondelle intercalaire étant configurée pour être positionnée entre des première et deuxième pièces d'un assemblage, lesdites première et deuxième pièces comportant des orifices traversants présentant des diamètres intérieurs configurés pour loger une tige d'un élément de liaison.

Selon l'invention, l'élément intercalaire comprend :
- un corps présentant des première et deuxième faces correspondant aux première et deuxième faces de la rondelle intercalaire à obtenir, une épaisseur et un pourtour identiques à ceux de la rondelle intercalaire à obtenir, une prédécoupe circulaire de diamètre égal au diamètre intérieur de la rondelle intercalaire à obtenir,
- un plot de centrage positionné sur l'une des première et deuxième faces du corps, solidaire du corps et centré par rapport à la prédécoupe,
- la prédécoupe étant configurée pour se rompre lorsque la tige d'un élément de liaison est insérée dans les orifices traversants des première et deuxième pièces dans l'un desquels est positionné le plot de centrage.

Grâce au plot de centrage, l'élément intercalaire reste correctement positionné lors du positionnement des pièces de l'assemblage.

Du fait que la prédécoupe se rompe lors de l'insertion de la tige d'un élément d'insertion, aucun élément non détachable, comme une bague de centrage d'une rondelle intercalaire de l'art antérieur, n'interfère avec la tige lors de son insertion, ce qui facilite la mise en place des éléments de liaison.

Selon l'invention le plot de centrage et le corps sont reliés par une liaison non permanente permettant de détacher le plot de centrage d'un disque du corps lorsque la prédécoupe est rompue.

Selon une autre caractéristique, le plot de centrage et le corps sont reliés par une liaison permanente.

Selon une autre caractéristique, le plot de centrage est cylindrique et présente un diamètre extérieur égal au diamètre intérieur de l'orifice traversant dans lequel le plot de centrage doit être positionné.

Selon une autre caractéristique, le plot de centrage est cylindrique et présente un diamètre extérieur inférieur au diamètre intérieur de l'orifice traversant dans lequel le plot de centrage doit être positionné. En complément, l'élément intercalaire comprend un anneau élastique présentant un diamètre intérieur inférieur au diamètre extérieur du plot de centrage et un diamètre extérieur égal ou légèrement supérieur au diamètre intérieur de l'orifice traversant dans lequel le plot de centrage doit être positionné, ledit anneau élastique étant positionné autour du plot de centrage et configuré pour pouvoir se comprimer entre le plot de centrage et l'orifice traversant dans lequel le plot de centrage doit être positionné.

Selon une autre caractéristique, le plot de centrage présente une paroi latérale cylindrique, deux faces d'extrémité dont l'une est plaquée contre l'une des faces du corps ainsi qu'une gorge périphérique prévue sur la paroi latérale, distante des faces d'extrémité et configurée pour loger l'anneau élastique.

Selon une autre caractéristique, la prédécoupe comprend une succession d'entailles traversant le corps.

L'invention a également pour objet un procédé d'assemblage d'au moins deux pièces maintenues assemblées par au moins un élément de liaison, ledit élément de liaison comprenant des première et deuxième butées ainsi qu'une tige reliant lesdites première et deuxième butées, les pièces à assembler comprenant chacune, pour chaque élément de liaison, un orifice traversant configuré pour loger la tige de l'élément de liaison, caractérisé en ce que le procédé comprend :
- une étape de positionnement d'au moins un élément intercalaire selon l'une des caractéristiques précédentes, en insérant et centrant son plot de centrage dans un des orifices traversants destinés à recevoir un élément de liaison,
- une étape de positionnement des pièces à assembler, le corps de chaque élément intercalaire étant positionné entre les pièces,
- une étape d'insertion de la tige d'un élément de liaison dans l'orifice traversant, dans lequel le plot de centrage de l'élément intercalaire est positionné, lors de laquelle la prédécoupe se rompt, permettant à la tige de traverser les pièces, une partie de l'élément intercalaire étant conservée entre les pièces et formant une rondelle intercalaire,
- une étape de serrage de chaque élément de liaison.

D'autres caractéristiques et avantages ressortiront de la description de l'invention qui va suivre, description donnée à titre d'exemple uniquement, en regard des dessins annexés parmi lesquels :
- La figure 1 est une coupe d'un assemblage d'au moins deux pièces,
- La figure 2 est une vue en perspective d'une rondelle intercalaire illustrant un mode de réalisation de l'art antérieur,
- La figure 3 représente des coupes illustrant différentes étapes d'un procédé d'assemblage de deux pièces utilisant des rondelles intercalaires telles qu'illustrées sur la figure 2,
- La figure 4 est une vue en perspective d'un corps d'un élément intercalaire prédécoupé illustrant un mode de réalisation de l'invention,
- La figure 5 est une vue en perspective d'un élément intercalaire prédécoupé illustrant un mode de réalisation de l'invention,
- La figure 6 représente des coupes illustrant différentes étapes d'un procédé d'assemblage d'au moins deux pièces utilisant des éléments intercalaires prédécoupés tels qu'illustrés sur la figure 5, et
- La figure 7 est une vue en perspective d'un élément intercalaire prédécoupé et de ses différentes parties illustrant un mode de réalisation de l'invention.

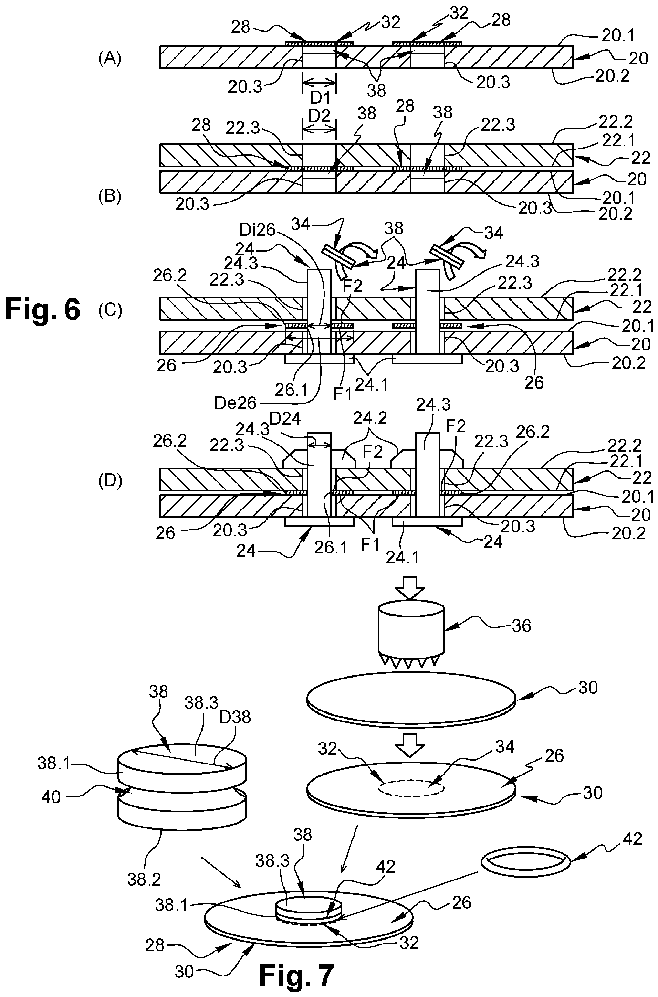

Selon un mode de réalisation visible sur la partie (D) de la figure 6, un assemblage comprend au moins des première et deuxième pièces 20, 22, maintenues assemblées par au moins un élément de liaison 24.

La première pièce 20 comprend une première face 20.1 orientée vers la deuxième pièce 22, une deuxième face 20.2 opposée à la première face 20.1 ainsi qu'un orifice traversant 20.3, un pour chaque élément de liaison 24, débouchant au niveau des première et deuxième faces 20.1, 20.2. La deuxième pièce 22 comprend une première face 22.1 orientée vers la première pièce 20, une deuxième face 22.2 opposée à la première face 22.1 ainsi qu'un orifice traversant 22.3, un pour chaque élément de liaison 24, débouchant au niveau des première et deuxième faces 22.1, 22.2.

Chaque élément de liaison 24 comprend une première butée 24.1 plaquée contre la deuxième face 20.2 de la première pièce 20, une deuxième butée 24.2 plaquée contre la deuxième face 22.2 de la deuxième pièce 22 ainsi qu'une tige 24.3, reliant les première et deuxième butées 24.1, 24.2, logée dans les orifices traversants 20.3, 22.3 des première et deuxième pièces 20, 22. Selon une configuration, l'élément de liaison 24 est un boulon, la première butée 24.1 correspondant à la tête de la vis du boulon, la tige 24.3 correspondant à la tige filetée de la vis et la deuxième butée 24.2 correspondant à l'écrou du boulon. Bien entendu, l'invention n'est pas limitée à cette configuration pour les éléments de liaison 24. A titre d'exemple, l'élément de liaison 24 pourrait être un rivet.

Sur le plan dimensionnel, pour un élément de liaison 24 donné, l'orifice traversant 20.3 de la première pièce 20, logeant la tige 24.3 de l'élément de liaison 24, présente un premier diamètre intérieur D1. L'orifice traversant 22.3 de la deuxième pièce 22, logeant la tige 24.3 de l'élément de liaison 24, présente un deuxième diamètre intérieur D2 sensiblement égal au premier diamètre D1. La tige 24.3 de l'élément de liaison 24 présente un diamètre extérieur D24 inférieur aux premier et deuxième diamètres intérieurs D1, D2.

Pour au moins un des éléments de liaison 24, l'assemblage comprend une rondelle intercalaire 26 positionnée entre les première et deuxième pièces 20, 22 et autour de la tige 24.3 de l'élément de liaison 24. Selon une configuration, l'assemblage comprend une rondelle intercalaire 26 pour chaque élément de liaison 24. La rondelle intercalaire 26 présente une première face F1 orientée vers la première pièce 20 en fonctionnement ainsi qu'une deuxième face F2 parallèle à la première face F1 et orientée vers la deuxième pièce 22 en fonctionnement.

Sur le plan dimensionnel, la rondelle intercalaire 26 présente une épaisseur de rondelle (distance séparant les première et deuxième faces F1, F2) de l'ordre de quelques dixièmes de millimètre à quelques millimètres. Elle comprend un trou traversant 26.1 qui présente un diamètre intérieur Di26 supérieur au diamètre extérieur D24 de la tige 24.3 de l'élément de liaison 24, approximativement égal au premier ou deuxième diamètre intérieur D1, D2 de l'orifice traversant 20.3, 22.3 de la première ou deuxième pièce 20, 22. La rondelle intercalaire 26 comprend un pourtour 26.2 présentant au moins une dimension supérieure aux diamètres intérieurs D1, D2 des orifices traversants 20.3, 22.3 des première et deuxième pièces 20, 22. Selon une configuration, le pourtour 26.2 de la rondelle intercalaire 26 est circulaire et présente un diamètre extérieur De26 supérieur aux diamètres intérieurs D1, D2 des orifices traversants 20.3, 22.3 des première et deuxième pièces 20, 22. Bien entendu, l'invention n'est pas limitée à cette forme pour le pourtour 26.2.

Selon un mode de réalisation, au moins l'une des première et deuxième faces F1, F2 de la rondelle intercalaire 26 présente un coefficient de frottement élevé. De préférence, les deux faces F1, F2 présentent des coefficients de frottement élevés. Ce mode de réalisation permet d'améliorer les caractéristiques mécaniques de l'assemblage, notamment en matière de résistance au cisaillement.

Selon une caractéristique, chaque rondelle intercalaire 26 est obtenue à partir d'un élément intercalaire 28, visible sur les figures 5 et 7, comportant un corps 30 plat qui présente une épaisseur égale à l'épaisseur de rondelle et un pourtour 30.1 identique au pourtour 26.2 de la rondelle intercalaire 26. Cet élément intercalaire 28 ne comprend aucun orifice traversant. Lorsque la rondelle intercalaire 26 présente un pourtour 26.2 circulaire, le corps 30 est un disque qui présente un diamètre extérieur D30 égal au diamètre extérieur De26 de la rondelle intercalaire 26.

Le corps 30 de l'élément intercalaire 28 présente des première et deuxième faces qui correspondent aux première et deuxième faces F1, F2 de la rondelle intercalaire 26 et qui présentent des coefficients de frottement identiques à ceux souhaités pour la rondelle intercalaire 26.

Le corps 30 de l'élément intercalaire 28 comprend une prédécoupe 32 circulaire de diamètre égal au diamètre intérieur Di26 de la rondelle intercalaire 26.

Cette prédécoupe 32 délimite à l'extérieur une rondelle intercalaire 26 et à l'intérieur un disque 34.

Cette prédécoupe 32 est configurée pour conserver la rondelle intercalaire 26 et le disque 34 liés l'un à l'autre tant qu'un effort de séparation exercé sur la rondelle intercalaire 26 et/ou le disque 34 est inférieur à un seuil donné et pour se rompre et obtenir une séparation de la rondelle intercalaire 26 et du disque 34 lorsque l'effort de séparation est supérieur au seuil donné. Ce dernier est déterminé de manière à ce que le disque 34 se détache de la rondelle intercalaire 26 lorsque la tige 24.3 d'un élément de liaison 24 est insérée dans les orifices traversants 20.3, 22.3 des première et deuxième pièces 10, 12.

Selon un mode de réalisation, la prédécoupe 32 est réalisée en usinant une rainure circulaire avec une scie cloche sur une certaine épaisseur du corps 30 de l'élément intercalaire 28.

Selon un autre mode de réalisation, la prédécoupe 32 est réalisée à l'aide d'un emporte-pièce 36 circulaire et cranté, comme illustré sur la figure 7, permettant d'obtenir des entailles discontinues le long de la prédécoupe 32. Dans ce cas, la prédécoupe 32 comprend une succession d'entailles traversant le corps 30.

Bien entendu, l'invention n'est pas limitée à ces modes de réalisation pour obtenir la prédécoupe 32.

Le corps 30 de l'élément intercalaire 28 peut être métallique ou en matériau composite.

Comme illustré sur les figures 5 à 7, l'élément intercalaire 28 comprend un plot de centrage 38 positionné sur l'une des faces du corps 30, solidaire de ce dernier et centré par rapport à la prédécoupe 32.

Ce plot de centrage 38 est cylindrique et présente une paroi latérale 38.1 cylindrique et deux faces d'extrémité 38.2, 38.3 planes et sensiblement perpendiculaires à l'axe de la paroi latérale 38.1, l'une des faces d'extrémité 38.2 étant plaquée contre l'une des faces du corps 30 de l'élément intercalaire 28.

Selon une configuration, le plot de centrage 38 et le corps 30 sont reliés par une liaison permanente, comme par collage par exemple.

Selon l'invention le plot de centrage 38 et le corps 30 sont reliés par une liaison non permanente, en utilisant un adhésif repositionnable ou des bandes auto-agrippantes par exemple, permettant de détacher le plot de centrage 38 du reste du corps 30 notamment lorsque la prédécoupe 32 est rompue. Cette configuration permet de réutiliser le plot de centrage 38.

Selon un mode de réalisation, le plot de centrage 38 est en matériau composite ou en matière plastique. Il peut être réalisé par impression tridimensionnelle ou par moulage. Bien entendu, l'invention n'est pas limitée à ces matériaux ou ces modes de fabrication.

Ce plot de centrage 38 présente une hauteur (distance séparant les faces d'extrémité 38.2, 38.3) de l'ordre de quelques millimètres à quelques centimètres.

Ce plot de centrage 38 est configuré pour centrer la prédécoupe 32 par rapport aux orifices traversants 20.3, 22.3 des première et deuxième pièces 20, 22 en s'insérant dans l'un desdits orifices traversants 20.3, 22.3.

Selon un mode de réalisation visible sur la figure 5, le plot de centrage 38 présente un diamètre extérieur D38 égal au diamètre intérieur D1 de l'orifice traversant 20.3 dans lequel il doit être positionné.

Selon un autre mode de réalisation visible sur la figure 7, le plot de centrage 38 présente un diamètre extérieur D38 inférieur au diamètre intérieur D1 de l'orifice traversant 20.3 dans lequel il doit être positionné. Sa paroi latérale 38.1 présente une gorge périphérique 40 distante des faces d'extrémité 38.2, 38.3. En complément, l'élément intercalaire 28 comprend un anneau élastique 42 configuré pour entourer le plot de centrage 38 et se loger dans la gorge périphérique 40. Cet anneau élastique 42 présente un diamètre intérieur inférieur au diamètre extérieur D38 du plot de centrage 38 et un diamètre extérieur égal ou légèrement supérieur au diamètre intérieur D1 de l'orifice traversant 20.3 dans lequel le plot de centrage 38 doit être positionné.

Cet anneau élastique 42 est configuré pour pouvoir se comprimer entre le plot de centrage 38, plus particulièrement le fond de la gorge périphérique 40, et la paroi de l'orifice traversant 20.3 dans lequel le plot de centrage 38 doit être positionné.

Selon une mode de réalisation, l'anneau élastique 42 est un joint torique.

Le principe de fonctionnement est décrit au regard de la figure 6.

Comme illustré sur la partie (A), le procédé d'assemblage comprend une étape de positionnement d'au moins un élément intercalaire 28 complet, la prédécoupe 32 n'étant pas rompue, au niveau d'un orifice traversant 20.3 de la première pièce 20 dans lequel doit être logée la tige 24.3 d'un élément de liaison 24. Pour chaque élément intercalaire 28, le plot de centrage 38 est positionné dans l'orifice traversant 20.3 de manière centrée et le corps 30 est plaqué contre la première face 20.1 de la première pièce 20.

En suivant, comme illustré sur la partie (B) de la figure 6, le procédé d'assemblage comprend une étape de positionnement des première et deuxième pièces 20, 22 l'une par rapport à l'autre en faisant coïncider les orifices traversants 20.3, 22.3 des première et deuxième pièces 20, 22, le corps 30 de chaque élément intercalaire 28 étant positionnés entre les pièces 20, 22.

Comme illustré sur la partie (C) de la figure 6, le procédé d'assemblage comprend une étape d'insertion des tiges 24.3 des éléments de liaison 24 dans les orifices traversants 20.3 de la première pièce 20 depuis la deuxième face 20.2. Lors de cette étape d'insertion des tiges 24.3, la prédécoupe 32 de chaque élément intercalaire 28 se rompt permettant à la tige 24.3 de traverser les pièces 20, 22. Ainsi, le disque 34 et le plot de centrage 38 de chaque élément intercalaire 28 sont éjectés en dehors de l'orifice traversant 22.3 de la deuxième pièce 22. Seule une partie de l'élément intercalaire 28 est conservée entre les pièces 20, 22 et forme une rondelle intercalaire 26.

La tige 24.3 de chaque élément de liaison 24 étant en saillie par rapport à la deuxième face 22.2 de la deuxième pièce 22, le procédé d'assemblage comprend une étape de serrage des éléments de liaison 24 en mettant en place la deuxième butée 24.2 de chaque élément de liaison 24, comme l'écrou par exemple, pour maintenir les première et deuxième pièces 20, 22 plaquées contre les rondelles intercalaires 26, comme illustré sur la partie (D) de la figure 6.

Le plot de centrage 38 permet de maintenir en position l'élément intercalaire 28 lors du positionnement des pièces 10, 12 de l'assemblage l'une par rapport à l'autre.

Contrairement aux bagues de centrage 18 des rondelles intercalaires 16 de l'art antérieur, aucun élément non détachable n'interfère avec les tiges 24.3 des éléments de liaison 24.

Enfin, le jeu entre la tige des éléments de liaison et les pièces à assembler peut être réduit dans la mesure où il n'est pas nécessaire, comme pour l'art antérieur, de prévoir un espacement entre la tige de l'élément de liaison et au moins une des pièces pour loger une bague de centrage d'une rondelle intercalaire.

## Revendications

1. Elément intercalaire permettant d'obtenir une rondelle intercalaire (26) comportant des première et deuxième faces (F1, F2), une épaisseur, un pourtour (26.2) ainsi qu'un trou traversant (26.1) présentant un diamètre intérieur (Di26), ladite rondelle intercalaire (26) étant configurée pour être positionnée entre des première et deuxième pièces (20, 22) d'un assemblage, lesdites première et deuxième pièces (20, 22) comportant des orifices traversants (20.3, 22.3) présentant des diamètres intérieurs (D1,D2) configurés pour loger une tige (24.3) d'un élément de liaison (24) ; l'élément intercalaire (28) comprend :
- un corps (30) présentant des première et deuxième faces correspondant aux première et deuxième faces (F1, F2) de la rondelle intercalaire (26) à obtenir, une épaisseur et un pourtour identiques à ceux de la rondelle intercalaire (26) à obtenir, ledit corps (30) comportant une prédécoupe (32) circulaire de diamètre égal au diamètre intérieur (Di26) de la rondelle intercalaire (26) à obtenir,
- un plot de centrage (38) positionné sur l'une des première et deuxième faces du corps (30), solidaire du corps (30) et centré par rapport à la prédécoupe (32),
- la prédécoupe (32) étant configurée pour se rompre lorsque la tige (24.3) d'un élément de liaison (24) est insérée dans les orifices traversants (20.3, 22.3) des première et deuxième pièces (10, 12) dans l'un desquels est positionné le plot de centrage (38),
**caractérisé en ce que**:
- le plot de centrage (38) et le corps (30) étant reliés par une liaison non permanente permettant de détacher le plot de centrage (38) d'un disque (34) du corps (30) lorsque la prédécoupe (32) est rompue.

2. Elément intercalaire selon la revendication précédente, **caractérisé en ce que** le plot de centrage (38) est cylindrique et présente un diamètre extérieur (D38) égal au diamètre intérieur (D1) de l'orifice traversant dans lequel le plot de centrage (38) doit être positionné.

3. Elément intercalaire selon la revendication 1, **caractérisé en ce que** le plot de centrage (38) est cylindrique et présente un diamètre extérieur (D38) inférieur au diamètre intérieur (D1) de l'orifice traversant (20.3) dans lequel le plot de centrage (38) doit être positionné et **en ce que** l'élément intercalaire (28) comprend un anneau élastique (42) présentant un diamètre intérieur inférieur au diamètre extérieur (D38) du plot de centrage (38) et un diamètre extérieur égal ou légèrement supérieur au diamètre intérieur (D1) de l'orifice traversant (20.3) dans lequel le plot de centrage (38) doit être positionné, ledit anneau élastique (42) étant positionné autour du plot de centrage (38) et configuré pour pouvoir se comprimer entre le plot de centrage (38) et l'orifice traversant (20.3) dans lequel le plot de centrage (38) doit être positionné.

4. Elément intercalaire selon la revendication précédente, **caractérisé en ce que** le plot de centrage (38) présente une paroi latérale (38.1) cylindrique, deux faces d'extrémité (38.2, 38.3) dont l'une est plaquée contre l'une des faces du corps (30) ainsi qu'une gorge périphérique (40) prévue sur la paroi latérale (38.1), distante des faces d'extrémité (38.2, 38.3) et configurée pour loger l'anneau élastique (42).

5. Elément intercalaire selon l'une des revendications précédentes, **caractérisé en ce que** la prédécoupe (32) comprend une succession d'entailles traversant le corps (30).

6. Procédé d'assemblage d'au moins deux pièces (10, 12) maintenues assemblées par au moins un élément de liaison (24), ledit élément de liaison (24) comprenant des première et deuxième butées (24.1, 24.2) ainsi qu'une tige (24.3) reliant lesdites première et deuxième butées (24.1, 24.2), les pièces (10, 12) à assembler comprenant chacune, pour chaque élément de liaison (24), un orifice traversant (20.3, 22.3) configuré pour loger la tige (24.3) de l'élément de liaison (24), **caractérisé en ce que** le procédé comprend :
- une étape de positionnement d'au moins un élément intercalaire (28) selon l'une des revendications précédentes, en insérant et centrant son plot de centrage (38) dans un des orifices traversants (20.3, 20.3) destinés à recevoir un élément de liaison (24),
- une étape de positionnement des pièces (20, 22) à assembler, le corps (30) de chaque élément intercalaire (28) étant positionné entre les pièces (20, 22),
- une étape d'insertion de la tige (24.3) d'un élément de liaison (24) dans l'orifice traversant (20.3) dans lequel le plot de centrage (38) de l'élément intercalaire (28) est positionné lors de laquelle la prédécoupe (32) se rompt, permettant à la tige (24.3) de traverser les pièces (20, 22), une partie de l'élément intercalaire (28) étant conservée entre les pièces (20, 22) et formant une rondelle intercalaire (26),
- une étape de serrage de chaque élément de liaison (24).

## Patentansprüche

1. Zwischenelement, das es ermöglicht, eine Zwischenscheibe (26) zu erhalten, die eine erste und eine zweite Fläche (F1, F2), eine Dicke, einen Umfang (26.2) sowie ein Durchgangsloch (26.1) mit einem Innendurchmesser (Di26) aufweist, wobei die Zwischenscheibe (26) so eingerichtet ist, dass sie zwischen einem ersten und einem zweiten Teil (20, 22) einer Baugruppe anordenbar ist, wobei das erste und das zweite Teil (20, 22) Durchgangsöffnungen (20.3, 22.3) mit Innendurchmessern (D1, D2) aufweisen, die so eingerichtet sind, dass sie einen Schaft (24.3) eines Verbindungselements (24) aufnehmen können, wobei das Zwischenelement (28) umfasst:
- einen Körper (30), der eine erste und eine zweite Fläche, die der ersten und der zweiten Fläche (F1, F2) der zu erhaltenden Zwischenscheibe (26) entsprechen, eine Dicke und einen Umfang aufweist, die mit denen der zu erhaltenden Zwischenscheibe (26) identisch sind, wobei der Körper (30) einen kreisförmigen Vorschnitt (32) mit einem Durchmesser aufweist, der gleich dem Innendurchmesser (Di26) der zu erhaltenden Zwischenscheibe (26) ist,
- einen Zentrierstift (38), der auf einer der ersten und zweiten Seiten des Körpers (30) angeordnet, fest mit dem Körper (30) verbunden und in Bezug auf den Vorschnitt (32) zentriert ist,
- wobei der Vorschnitt (32) so eingerichtet ist, dass er bricht, wenn der Schaft (24.3) eines Verbindungselements (24) in die Durchgangsöffnungen (20.3, 22.3) des ersten und zweiten Teils (10, 12) eingeführt wird, in eine von denen der Zentrierstift (38) positioniert ist,
**dadurch gekennzeichnet, dass**
- der Zentrierstift (38) und der Körper (30) durch eine nicht dauerhafte Verbindung verbunden sind, die es ermöglicht, den Zentrierstift (38) von einer Scheibe (34) des Körpers (30) zu lösen, wenn der Vorschnitt (32) gebrochen ist.

2. Zwischenelement nach dem vorhergehenden Anspruch, **dadurch gekennzeichnet, dass** der Zentrierstift (38) zylindrisch ist und einen Außendurchmesser (D38) aufweist, der gleich dem Innendurchmesser (D1) der Durchgangsöffnung ist, in der der Zentrierstift (38) angeordnet werden soll.

3. Zwischenelement nach Anspruch 1, **dadurch gekennzeichnet, dass** der Zentrierstift (38) zylindrisch ist und einen Außendurchmesser (D38) aufweist, der kleiner ist als der Innendurchmesser (D1) der Durchgangsöffnung (20.3), in dem der Zentrierstift (38) angeordnet werden soll, und dass das Zwischenelement (28) einen elastischen Ring (42) umfasst, mit einem Innendurchmesser, der kleiner ist als der Außendurchmesser (D38) des Zentrierstiftes (38), und mit einem Außendurchmesser, der gleich oder etwas größer ist als der Innendurchmesser (D1) der Durchgangsöffnung (20.3), in dem der Zentrierstift (38) angeordnet werden soll, wobei der elastische Ring (42) um den Zentrierstift (38) herum angeordnet und so eingerichtet ist, dass er zwischen dem Zentrierstift (38) und der Durchgangsöffnung (20.3), in der der Zentrierstift (38) angeordnet werden soll, komprimierbar ist.

4. Zwischenelement nach dem vorhergehenden Anspruch, **dadurch gekennzeichnet, dass** der Zentrierstift (38) eine zylindrische Seitenwand (38.1), zwei Endflächen (38.2, 38.3), von denen eine gegen eine der Flächen des Körpers (30) angesetzt ist, sowie eine Umfangsnut (40) aufweist, die an der Seitenwand (38.1) vorgesehen, von den Endflächen (38.2, 38.3) beabstandet und zur Aufnahme des elastischen Rings (42) ausgebildet ist.

5. Zwischenelement nach einem der vorhergehenden Ansprüche, **dadurch gekennzeichnet, dass** der Vorschnitt (32) eine Folge von Einschnitten aufweist, die durch den Körper (30) verlaufen.

6. Verfahren zum Zusammenbau von wenigstens zwei Teilen (10, 12), die durch wenigstens ein Verbindungselement (24) zusammengehalten werden, wobei das Verbindungselement (24) einen ersten und einen zweiten Anschlag (24.1, 24.2) sowie einen Schaft (24.3) umfasst, der den ersten und den zweiten Anschlag (24.1, 24.2) verbinden, wobei die zu verbindenden Teile (10, 12) für jedes Verbindungselement (24) jeweils eine Durchgangsöffnung (20.3, 22.3) aufweisen, die so eingerichtet ist, dass sie den Schaft (24.3) des Verbindungselements (24) aufnimmt, **dadurch gekennzeichnet, dass** das Verfahren umfasst:
- einen Schritt zum Positionieren wenigstens eines Zwischenelements (28) nach einem der vorhergehenden Ansprüche, indem sein Zentrierstift (38) in eine der Durchgangsöffnungen (20.3, 20.3) zur Aufnahme eines Verbindungselements (24) eingeführt und zentriert wird,
- einen Schritt des Positionierens der zusammenzufügenden Teile (20, 22), wobei der Körper (30) jedes Zwischenelementes (28) zwischen den Teilen (20, 22) angeordnet wird,
- einen Schritt des Einführens des Schafts (24.3) eines Verbindungselements (24) in die Durchgangsöffnung (20.3), in der der Zentrierungsstift (38) des Zwischenelements (28) angeordnet ist, bei dem der Vorschnitt (32) bricht, wodurch der Schaft (24.3) die Teile (20, 22) durchqueren kann, wobei ein Teil des Zwischenelements (28) zwischen den Teilen (20, 22) verbleibt und eine Zwischenscheibe (26) bildet,
- einen Schritt des Festziehens jedes Verbindungselements (24).

## Claims

1. Spacer element serving to obtain a spacer washer (26) comprising first and second faces (F1, F2), a thickness, a perimeter (26.2) and a through-hole (26.1) having an internal diameter (Di26), said spacer washer (26) being designed to be positioned between first and second parts (20, 22) of an assembly, said first and second parts (20, 22) comprising through-orifices (20.3, 22.3) having internal diameters (D1, D2) designed to accommodate a shank (24.3) of a connection element (24); the spacer element (28) comprising:
- a body (30) having first and second faces corresponding to the first and second faces (F1, F2) of the spacer washer (26) that is to be obtained, a thickness and a perimeter that are identical to those of the spacer washer (26) that is to be obtained, said body (30) comprising a circular score line (32) whose diameter is equal to the internal diameter (Di26) of the spacer washer (26) that is to be obtained,
- a centering pad (38) positioned on either the first or second face of the body (30), being secured to the body (30) and centered with respect to the score line (32),
- the score line (32) being designed to break when the shank (24.3) of a connection element (24) is inserted into the through-orifices (20.3, 22.3) of the first and second parts (10, 12) in one of which the centering pad (38) is positioned,
**characterized in that** :
- the centering pad (38) and the body (30) are connected by a non-permanent connection, allowing the centering pad (38) to be detached from a disk (34) of the body (30) when the score line (32) is broken.

2. Spacer element as claimed in the preceding claim, wherein the centering pad (38) is cylindrical and has an external diameter (D38) equal to the internal diameter (D1) of the through-orifice in which the centering pad (38) is to be positioned.

3. Spacer element as claimed in claim 1, wherein the centering pad (38) is cylindrical and has an external diameter (D38) smaller than the internal diameter (D1) of the through-orifice (20.3) in which the centering pad (38) is to be positioned, and wherein the spacer element (28) comprises an elastic ring (42) having an internal diameter smaller than the external diameter (D38) of the centering pad (38) and an external diameter equal to or slightly greater than the internal diameter (D1) of the through-orifice (20.3) in which the centering pad (38) is to be positioned, said elastic ring (42) being positioned around the centering pad (38) and designed to be able to be compressed between the centering pad (38) and the through-orifice (20.3) in which the centering pad (38) is to be positioned.

4. Spacer element as claimed in the preceding claim, wherein the centering pad (38) has a cylindrical lateral wall (38.1), two end faces (38.2, 38.3) of which one is pressed against one of the faces of the body (30), and a peripheral channel (40) provided on the lateral wall (38.1), spaced apart from the end faces (38.2, 38.3) and designed to accommodate the elastic ring (42).

5. Spacer element as claimed in one of the preceding claims, wherein the score line (32) comprises a succession of cuts passing through the body (30).

6. Method for assembling at least two parts (10, 12) that are held assembled by at least one connection element (24), said connection element (24) comprising a first and a second abutment (24.1, 24.2) and a shank (24.3) connecting said first and second abutment (24.1, 24.2), the parts (10, 12) to be assembled each comprising, for each connection element (24), a through-orifice (20.3, 22.3) designed to accommodate the shank (24.3) of the connection element (24), wherein the method comprises:
- a step of positioning at least one spacer element (28) as claimed in one of the preceding claims, by inserting and centering its centering pad (38) into one of the through-orifices (20.3, 22.3) that are intended to receive a connection element (24),
- a step of positioning the parts (20, 22) that are to be assembled, the body (30) of each spacer element (28) being positioned between the parts (20, 22),
- a step of inserting the shank (24.3) of a connection element (24) into the through-orifice (20.3) in which the centering pad (38) of the spacer element (28) is positioned, during which step the score line (32) breaks, allowing the shank (24.3) to pass through the parts (20, 22), a portion of the spacer element (28) being retained between the parts (20, 22) and forming a spacer washer (26),
- a step of tightening each connection element (24).
